# EUROPEAN PATENT APPLICATION

(11) **EP 0 972 672 A1**
(43) Date of publication of application: **19.01.2000**
(21) Application number: 99113455.2
(22) Date of filing: 12.07.1999
(51) Int. Cl.: B60N 2/36, B60N 2/46

(54) **Foldable vehicle seat**

(30) Priority: 17.07.1998 JP 20322398
(71) Applicant: Central Motor Co., Ltd., Sagamihara-shi, Kanagawa (JP)
(72) Inventor: Saitou, Masahiro, Sagamihara-shi, Kanagawa (JP); Saitou, Hiroyuki, Sagamihara-shi, Kanagawa (JP); Beppu, Yasushi, Yokohama-shi, Kanagawa (JP)
(74) Representative: Viering, Jentschura & Partner

(57) **Abstract**

A side seat back is mounted by a hinge to a seat back so as to be rotatable around an axis parallel to an axis of rotation of the seat back and so as to be rotatable around an axis parallel to a direction of height of the seat back. A lower end portion of the side seat back is raised such that the side seat back is raised substantially 90°upward from the position at the transverse direction end of the seat back so that the side of the side seat back which has the largest surface area is substantially parallel to the floor panel. Then, the side seat back is rotated inwardly in a vehicle transverse direction, so as to enter a region of rotation of the seat back. Thus, the seat back can be reclined without the side seat back abutting another member such as a wheel house.

## Description

### BACKGROUND OF THE INVENTION

### Field of the Invention

The present invention relates to a seat, and more particularly, to a seat having a seat back at whose transverse direction end portions side seat backs are provided, the seat being used as, for example, the rear seat of a vehicle or the like.

### Description of the Related Art

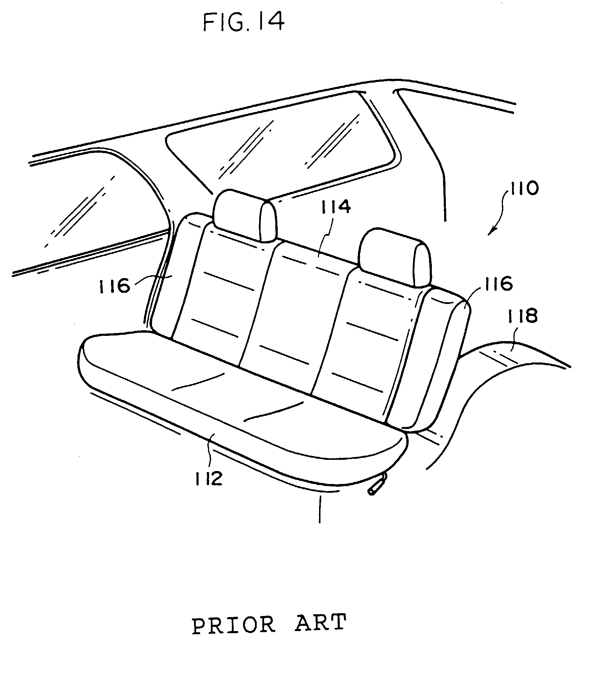

In Fig. 14, a rear seat 110 of a vehicle is shown as an example of a conventional seat.

The rear seat 110 has a seat back 114 provided rotatably with respect to a seat cushion 112, and the seat back 114 may be made to recline. The seat back 114 has a side seat back 116 at each transverse direction end portion thereof such that the width of the seat back 114 is substantially broadened.

At the vehicle, wheel houses 118 are formed behind the rear seat 110. The shape of the wheel house 118 is correspond to that of a rear tire, and the wheel houses 118 protrude into the vehicle compartment.

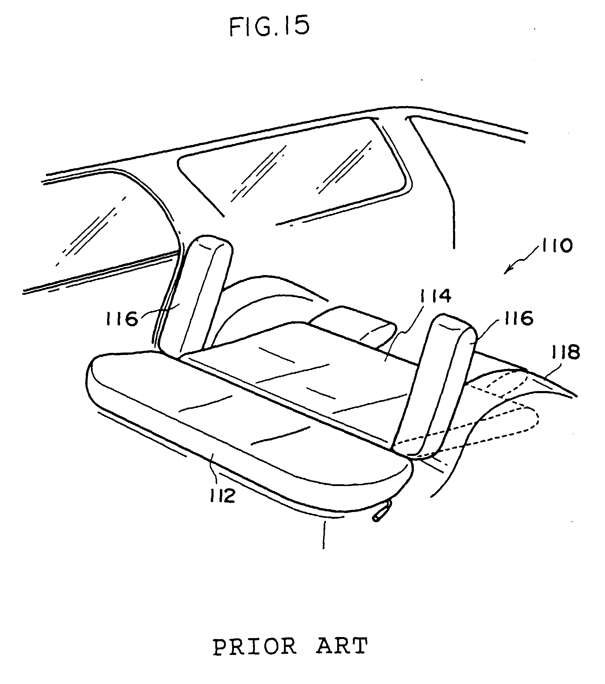

Therefore, the side seat backs 116 are fixed to the side panels of the vehicle body or the like so that, when the seat back 114 of the rear seat 110 is reclined, the seat back 114 is not prevented from reclining due to the side seat backs 116 abutting the wheel houses 118. That is, as shown in Fig. 15, only the seat back 114 is reclined, and the side seat backs 116 are not reclined. However, if the side seat backs 116 are fixed to the wheel houses 118, the side panels or the like, the structure of the vehicle body must be changed.

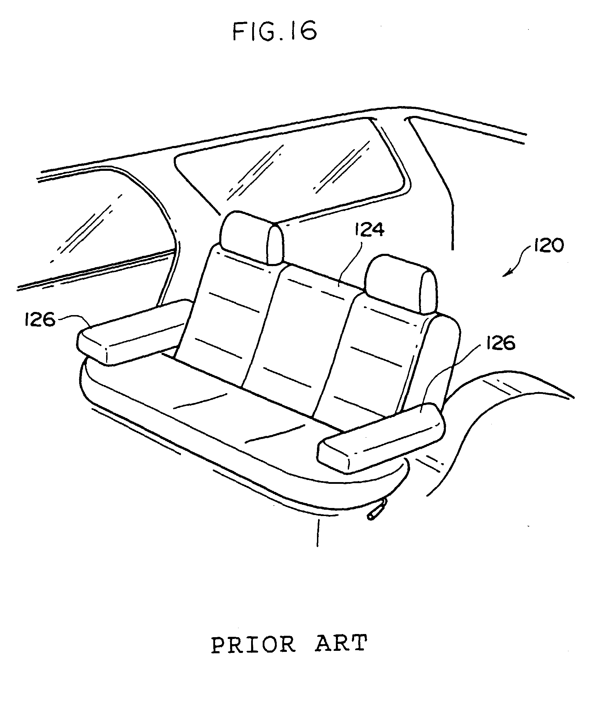

On the other hand, as shown in Fig. 16, a rear seat 120 has side seat backs 126 which are supported at vicinities of the bottom ends thereof such that the side seat backs 126 are rotatable with respect to a seat back 124. The side seat backs 126 of the rear seat 120 may be folded forward so as to be used as armrests.

With the side seat backs 126 being lowered forward, the seat back 124 may be reclined to a certain extent. However, when the seat back 124 is reclined a predetermined angle the side seat backs 126 abut to wheel houses. Moreover, the side seat backs 126 can be used as armrests, there are constrains on the configuration of the side seat backs 126.

Another type of rear seat has side seat backs which may be removed from the seat back. This rear seat requires a special storage place for the removed side seat backs.

Therefore, seats having side seat backs (not only rear seats of vehicles, but seats having side seat backs in general) have the above-described problems involved with rotating the seat back to a sufficient degree or to a full-flat state without the side seat backs abutting other members.

### SUMMARY OF THE INVENTION

With the aforementioned in view, an object of the present invention is to provide a seat in which a seat back can be set in a full-flat state without removing side seat backs, and without the need for constraints on the configuration of the side seat back or the need for structural changes.

A first aspect of the present invention is a seat comprising: a seat cushion supporting weight of persons sitting thereon; a seat back rotatably mounted to said seat cushion; a side seat back provided at a transverse direction end portion of said seat back; and supporting means supporting said side seat back such that said side seat back is movable with respect to said seat back from a position at which said side seat back is disposed at the transverse direction end portion of said seat back to a position at which said side seat back has entered into a region of rotation of said seat back.

The side seat back is supported by the supporting means with respect to the seat back. Moreover, the side seat back can be made to enter the region of rotation of the seat back while the side seat back is being supported by the supporting means and without the need for the side seat back to be removed from the seat back. Therefore, even if the seat back is reclined in this state, the side seat back does not hit against other members so that the seat back can be set in the full-flat state. The side seat back is not mounted to other members, and thus, the structure of other members need not be changed. Because the side seat back is not used as an armrest or the like, there are no constraints on the shape thereof

In the case in which the seat of the present invention is used as the rear seat of a vehicle, the seat back can be reclined without the side seat back hitting against the wheel house of the vehicle. The seat back can be made substantially flush with the seat cushion (i.e., can be set in the full-flat state). Because there is no need to mount the side seat back to the vehicle body, thre is no need to change the structure of the vehicle body (specifically, interior parts such as wheel houses and deck trim).

It suffices for the "position wherein said side seat back has entered into a region of rotation of said seat back" to be a position at which, when the seat back is rotated with respect to the seat cushion, the side seat back does not abut another member (a member not of the seat) and the rotation of the seat back is not limited. Accordingly, even a structure, in which the side seat back has not completely entered into the region of rotation of the seat back and juts out slightly from this region of rotation, suffices provided that the side seat back does not hit against another member and rotation of the seat back is not limited, it need not take into consideration that in the rotation of the seat back is not limited.

A second aspect of the present invention is a seat according to the first aspect of the present invention, wherein said supporting means is a hinge rotating said side seat back from the position at which said side seat back is disposed at the transverse direction end portion of said seat back toward a surface of a seat cushion side of said seat back, so as to make said side seat back enter into the region of rotation of said seat back.

Therefore, with a simple structure, the side seat back can be made to enter into the region of rotation of the seat back.

The side seat back is rotated toward the seat-cushion-side surface of the seat back. Thus, in the case where the seat is used as a seat of a vehicle, the side seat back is not caught between the floor of the vehicle compartment and the seat back while the seat back is being reclined, and the seat back can be made substantially flush with the seat cushion (i.e., can be set in the full-flat state). In the full-flat state, the side seat back which has been rotated onto the seat-cushion-side surface of the seat back can be used as a pillow.

A third aspect of the present invention is a seat according to the second aspect of the present invention, wherein said hinge supports said side seat back in the vicinity of an upper end of said side seat back such that said side seat back is rotatable around an axis substantially parallel to an axis of rotation of said seat back.

The lower end of the side seat back is lifted upward and rotated around the axis, and the side seat back is rotated toward the seat-cushion-side-surface of the seat back. Therefore, the side seat back can easily be made to enter into the region of rotation of the seat back.

A fourth aspect of the present invention is a seat according to the third aspect of the present invention, wherein said hinge has a lock mechanism locking said side seat back with respect to said seat back in a state in which said side seat back is rotated around said axis and a lower end side of said side seat back is raised.

In a state in which the lower end side of the side seat back are has been raised, the side seat back is locked and need not be supported. Therefore, the side seat back can easily be made to enter into the region of rotation of the seat back.

### BRIEF DESCRIPTION OF THE DRAWINGS

Fig. 1 is a perspective view which shows a seat (a rear seat of a vehicle) according to a first embodiment of the present invention.
Fig. 2 is a perspective view which shows the seat according to the first embodiment of the present invention in a state in which the bottom end portions of side seat backs are raised upward.
Fig. 3 is a perspective view which shows the seat according to the first embodiment of the present invention in a state in which the side seat backs are rotated inwardly in a transverse direction of the vehicle.
Fig. 4 is a perspective view which shows the seat according to the first embodiment of the present invention in a state in which a seat back is rotated and set in a full-flat state.
Fig. 5 is a perspective view which shows in enlarged form a hinge of the seat according to the first embodiment of the present invention.
Fig. 6 is a perspective view which shows in enlarged form the hinge of the seat according to the first embodiment of the present invention in a state in which the side seat back is rotated inwardly in a direction of the vehicle.
Fig. 7 is a perspective view which shows in enlarged form a lock mechanism of the seat according to the first embodiment of the present invention.
Fig. 8 is a cross-sectional view which shows the seat according to the first embodiment of the present invention, in which the state of the seat corresponds to Fig. 1.
Fig. 9 is a cross-sectional view which shows the seat according to the first embodiment of the present invention, in which the state of the seat corresponds to Fig. 2.
Fig. 10 is a cross-sectional view which shows the seat according to the first embodiment of the present invention, in which the state of the seat corresponds to Fig. 3.
Fig. 11 is a perspective view which shows in enlarged form a hinge of a seat according to a second embodiment of the present invention.
Fig. 12 is a vertical sectional view which shows in enlarged form the hinge of the seat according to the second embodiment of the present invention.
Fig. 13 is a transverse sectional view which shows in enlarged form the hinge of the seat according to the second embodiment of the present invention.
Fig. 14 is a perspective view which shows a conventional seat (a rear seat of a vehicle).
Fig. 15 is a perspective view which shows the conventional seat in Fig. 14 in a state in which a seat back is reclined.
Fig. 16 is a perspective view which shows another conventional seat (a rear seat of a vehicle).

### DESCRIPTION OF THE PREFERRED EMBODIMENTS

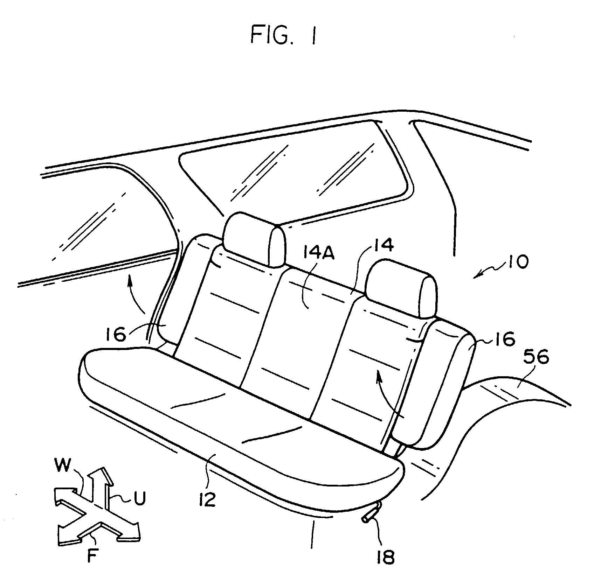

Figs. 1 through 4 illustrate a seat according to a first embodiment of the present invention in a state in which the seat is used as a rear seat 10 of a vehicle. In Figs. 1 through 6 and Figs. 8 through 10, the forward direction, the transverse direction and the upward direction of the vehicle are represented by arrows F, W and U respectively. Hereinafter, when only the terms "forward direction", "backward direction", "transverse direction" and "upward direction" are used, the terms represent the directions of the vehicle.

The rear seat 10 comprises a seat cushion 12, a seat back 14 supported rotatably by the seat cushion 12, and side seat backs 16 provided at the transverse direction ends of the seat back 14 (the ends of the seat back 14 in the direction of arrow W).

The seat cushion 12 is mounted to the floor panel (not shown) of the vehicle and supports the weight of persons sitting on the rear seat 10. The width of the seat cushion 12 is substantially the same as the width of the vehicle compartment, and is sufficient for two or three persons to sit on the seat cushion 12 along the transverse direction. The seat cushion 12 may be fixed to the floor panel, or may be mounted so as to be slidable along the longitudinal direction of the vehicle.

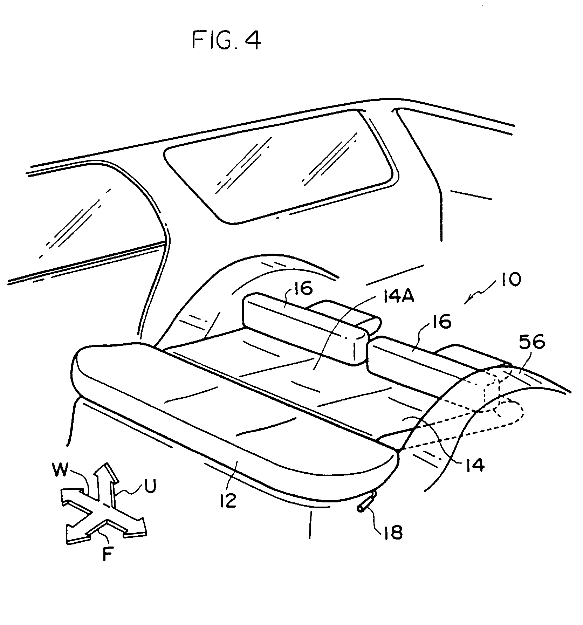

The lower end of the seat back 14 is supported at the rear of the seat cushion 12, and the seat back 14 is rotatable around the lower end thereof. Therefore, the seat back 14 is reclined by being rotated, and, as shown in Fig. 4, the seat back 14 can be made substantially flush with the seat cushion 12, i.e., can be set in the so-called full-flat state. Usually, the seat back 14 is locked by a lock mechanism (not shown) at an arbitrary angle of inclination. By operating a lever 18, this locking is released so that the seat back 14 can be rotated. In the following explanation, "region of rotation" of the seat back 14 means the region over which the seat back 14 passes when rotated.

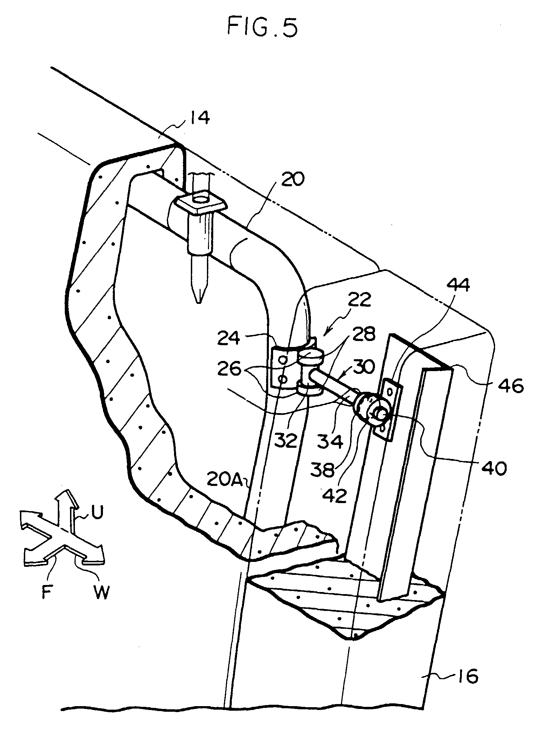

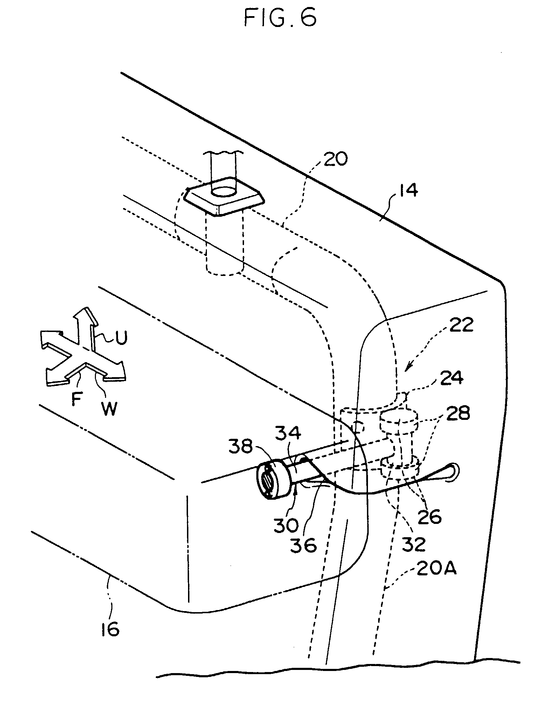

As shown in Figs. 5 and 6, a frame-shaped seat frame 20, which is formed in a substantially rectangular shape corresponding to the shape of the seat back 14, is provided within the seat back 14. Due to the seat frame 20, the regular shape of the seat back 14 can be maintained. Further, the seat frame 20 supports a portion of the weight of the persons sitting on the seat cushion 12 (mainly the weight from the persons leaning on the seat back 14).

A hinge 22 is mounted to the vicinity of the top end of a vertical side portion 20A of the seat frame 20. The side seat back 16 is mounted to the seat back 14 via the hinge 22. (The side seat back 16 is mounted to each transverse end portion of the seat back 14.) The seat back 14 is substantially broadened in the transverse direction due to the side seat backs 16.

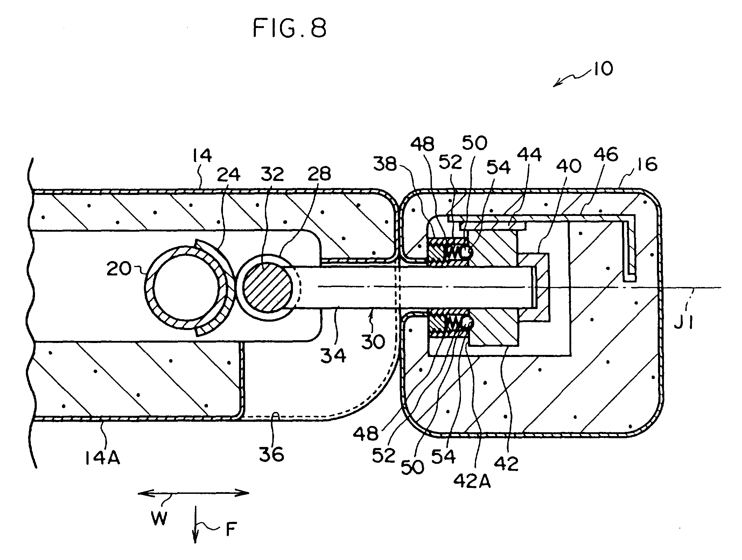

As shown in Figs. 5, 6 and 8 through 10, the hinge 22 has a fixed plate 24 fixed to the seat frame 20. The fixed plate 24 comprises an arc-shaped plate which is curved to fit the seat frame 20. The fixed plate 24 planarly contacts and is fastened to a transverse direction end portion side of the seat back 14 (the right side is illustrated in Figs. 8 through 10), so that the hinge 22 is mounted to a position at a transverse direction end portion side of the seat back 14.

A pair of hold plates 26 are fixed parallel to each other at upper and lower portions of the peripheral direction center of the fixed plate 24. The hold plates 26 are substantially disk-shaped. Each hold plate 26 has a cylindrical flange portion 28 protruding toward the opposite hold plate 26 so that concave portions for holding are formed on the mutually opposed surface of the hold plates 26.

The top end and bottom end of a shaft portion 32 of an arm 30 are fitted into the upper and lower concave portions for holding of the hold plates 26. The shaft portion 32 is rotatable around the center line of the hold plates 26, and is positioned in the axial direction by the hold plates 26 and in the radial direction by the flange portions 28.

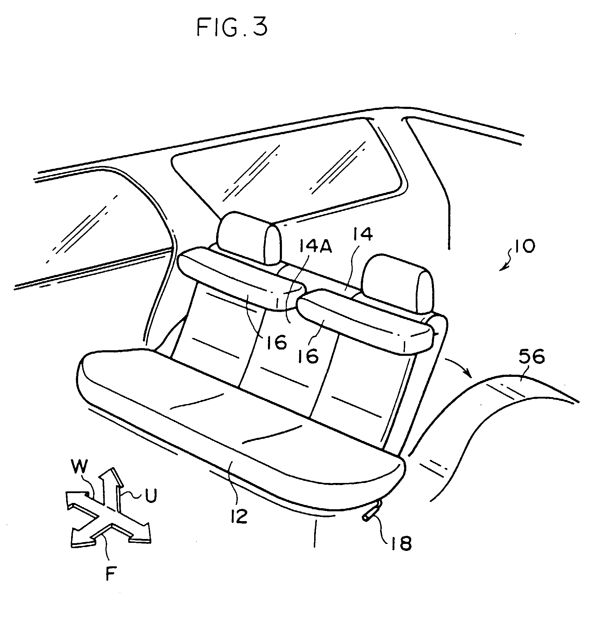

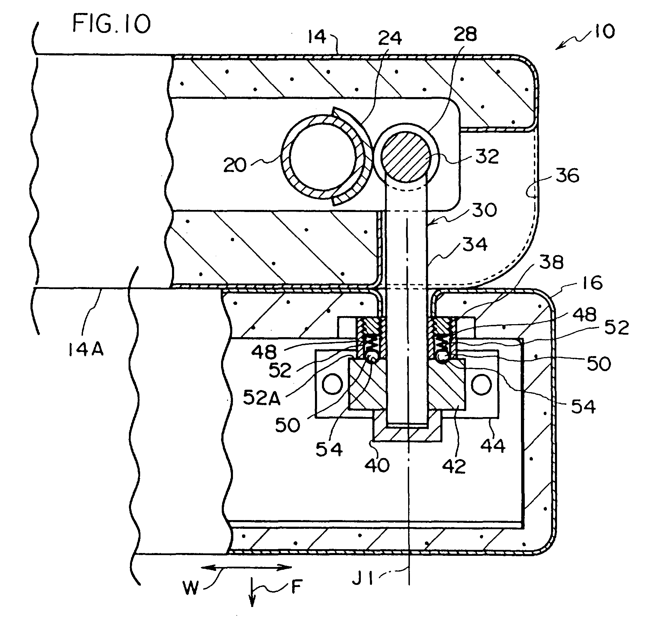

A cylindrical bar-shaped rotating portion 34 extends perpendicularly from the axial direction center of the shaft portion 32. Therefore, the arm 30 is formed on whole in a substantial T-shape by the shaft portion 32 and the rotating portion 34. When the shaft portion 32 is rotated, the rotating portion 34 is rotated in a regular plane. As will be described later, due to rotation of the rotating portion 34, the side seat back 16 is rotated between a position at the transverse direction end of the seat back 14 (see Figs. 1 and 8) and a position at which the side seat back 16 is disposed on a front surface 14A of the seat back 14 (and thus enters into the region of rotation of the seat back 14; see Figs. 3 and 10). The range of rotation of the rotating portion 34 is limited by an unillustrated stopper to the region between the position shown in Fig. 8 and the position shown in Fig.10.

The rotating portion 34 is parallel to the center of rotation of the seat back 14 when the side seat back 16 is located at the position at the transverse direction end of the seat back 14. A slit 36 is formed in the surface of the seat back 14 so that the rotating portion 34 rotated in this matter can pass therethrough.

As shown in detail in Figs. 8 through 10, at a vicinity of the distal end of the rotating portion 34, a cylindrical large diameter portion 38 is formed. The diameter of the large diameter portion 38 is greater than that of the rotating portion 34. A cylindrical cap 40 having a bottom is fit to the distal end of the rotating portion 34. The diameter of the cap 40 is greater than that of the rotating portion 34. A rotating cylinder 42 fastened to the vicinity of the top end of the side seat back 16 is provided between the large diameter portion 38 and the cap 40. The rotating cylinder 42 is rotatable around the axis J1 of the rotating portion 34.

Therefore, the side seat back 16 is mounted to the seat back 14 in such a manner as to be rotatable around the axis of the shaft portion 32 and around the axis J1 of the rotating portion 34.

The rotating cylinder 42 is positioned in the axial direction with respect to the rotating portion 34 by the large diameter portion 38 and the cap 40. The rotating portion 34 passes through the center of the rotating cylinder 42 tightly so that the rotating cylinder 42 is thereby positioned in the radial direction with respect to the rotating portion 34.

The rotating cylinder 42 is fastened to a side seat frame 46 in the side seat back 16 via a fastening plate 44. Therefore, when the lower end of the side seat back16 is to be raised upward the rotating cylinder 42 is rotated around the axis J1 of the rotating portion 34 such that the entire side seat back 16 is rotated around the axis J1 of the rotating portion 34.

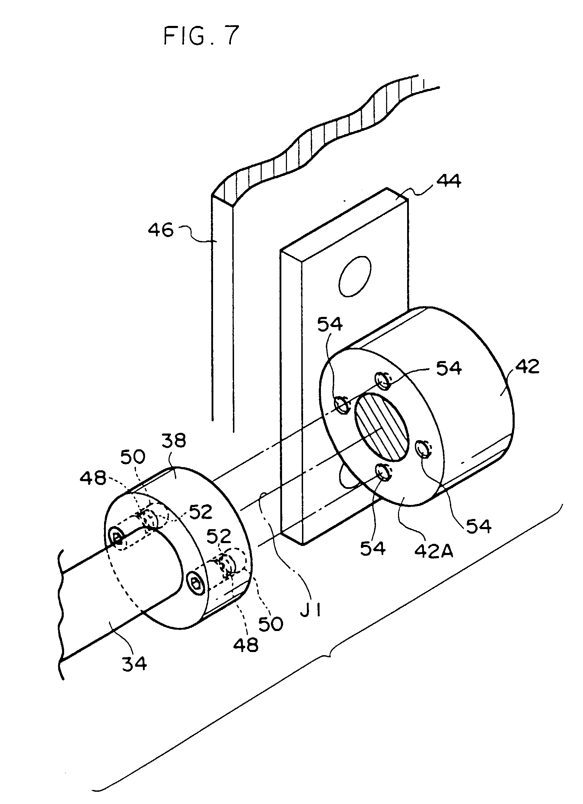

As shown in Figs. 7 through 10, two housing concave portions 48 are formed in the surface of the large diameter portion 38 facing the rotating cylinder 42. The housing concave portions 48 are symmetrical around the axis J1 of the rotating portion 34. A lock ball 50 is housed in the housing concave portion 48, and a helical compression spring 52 is provided between the lock ball 50 and the far wall of the housing concave portion 48. Therefore, the lock ball 50 is always urged toward the rotating cylinder 42 (i.e., in the direction of protruding out from The housing concave portion 48) by the helical compression spring 52.

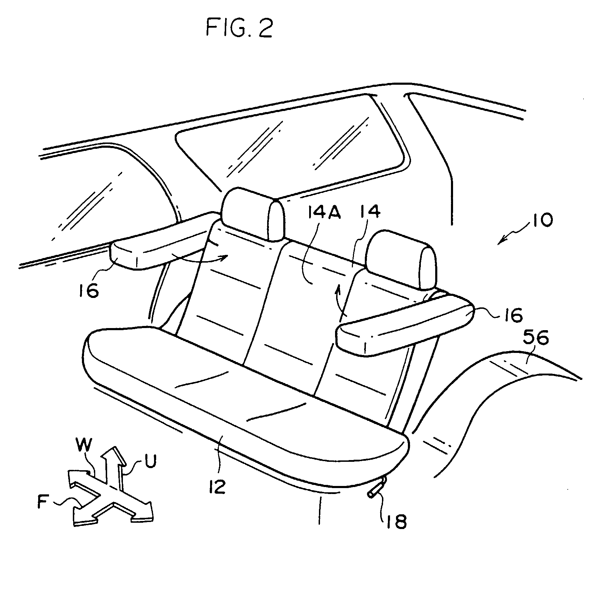

Four engagement concave portions 54 (see Fig.7) are formed in the opposing surface 42A of the rotating cylinder 42 opposing to the large diameter portion 38. These engagement concave portions 54 are disposed at angles of 90° around the axis J1 of the rotating cylinder 42. The engagement concave portions 54 are formed at predetermined positions so as to house the lock balls 50 when The side seat back 16 is substantially flush with the seat back 14 (see Fig. 1) and when the side seat back 16 is raised substantially 90°upward from the position at the transverse direction end of the seat back 14 so that the side of the side seat back 16 which has the largest surface area is substantially parallel to the floor panel (see Fig. 2).

Therefore, in the state in which the side seat back 16 is substantially flush with the seat back 14 (i.e., the state illustrated in Fig.1), the lock balls 50 urged by the helical compression springs 52 are engaged with two of the four engagement concave portions 54 and the side seat back 16 is locked with respect to the seat back 14. When the lower end of the side seat back 16 is raised upward such that the side seat back 16 is rotated with respect to the seat back 14, the lock balls 50 are pushed, against the urging force of the helical compression springs 52, by the opposing surface 42A so as to move toward the far walls of the housing concave portions 48. When the side seat back 16 is raised substantially 90°upward from the position at the transverse direction end of the seat back 14 so that the side of the side seat back 16 which has the largest surface area is substantially parallel to the floor panel (see Fig. 2), the lock balls 50 engage with the other two engagement concave portion 54 due to the urging force of the helical compression springs 52, and thus, in this state, the side seat back 16 is locked with respect to the seat back 14.

Next, operation of the rear seat 10 according to the first embodiment will be described.

As shown in Fig. 1, when the seat back 14 is not reclined, the side seat backs 16 are substantially flush with the seat back 14 at positions at the transverse direction ends of the seat back 14. Therefore, the width of the seat back 14 is substantially broadened such that the seat back 14 and the side seat backs 16 can support a part of the weight of two or three persons sitting on the rear seat 10.

In this state, as shown in Fig. 8, the lock balls 50 are engaged with the two of the engagement concave portions 54, and the side seat back 16 is thereby locked to the seat back 14. Therefore, the side seat back 16 cannot be rotated inadvertently with respect to the seat back 14.

When the seat back 14 is to be reclined, first, as shown in Fig. 2, the lower ends of the side seat backs 16 are raised forward and upward, and the side seat backs 16 are rotated with respect to the seat back 14. While the side seat back 16 is being rotated, the lock balls 50 are pushed by the facing surface 42A and are moved to the far walls of the housing concave portions 48 against the urging force of the helical compression springs 52. The lock balls 50 contact the opposing surface 42A and frictional force is generated between the lock balls 50 and the opposing surface 42A so that resistance of a degree suitable for rotating the side seat back 16 arises.

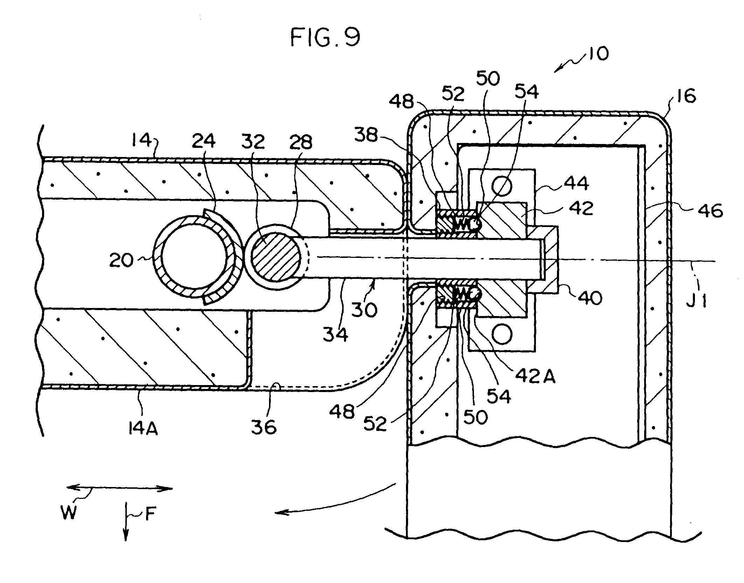

When the side seat back 16 is raised substantially 90°upward from the position at the transverse direction end of the seat back 14 so that the side of the side seat back 16 which has the largest surface area is substantially parallel to the floor panel, as shown in Fig. 9, the lock balls 50 are engaged with the other two engagement concave portions 54 so that the side seat back 16 is locked to the seat back 14 in this state.

Next, as shown in Figs. 3 and 10, the side seat back 16 is rotated around the shaft portion 32 (see Figs. 5, 6 and 9) toward the vehicle transverse direction inner side so that the side seat back 16 is made to contact the front surface 14A of the seat back 14 so as to be disposed on the front surface 14A of the seat back 14. In this way, the side seat back 16 enters into the region of rotation of the seat back 14. Therefore, even if a wheel house 56 protrudes into the vehicle compartment, the side seat back 16 does not hit the wheel house 56 and the rotation of the seat back 14 is not limited when the seat back 14 is being reclined.

As shown in Fig. 4, the seat back 14 can be substantially flush with the seat cushion 12, i.e., can be set in the so-called full-flat state. At this time, the side seat backs 16 can be used as pillows.

The side seat back 16 of the rear seat 10 according to the first embodiment is supported at the seat back 14 by the hinge 22 and can be made to enter into the region of rotation of the seat back 14. Therefore, even if the wheel house 56 protrudes into the vehicle compartment behind the rear seat 10, the seat back 14 can be rotated without the wheel house 56 getting in the way. Needless to say, even if a member other than the wheel house 56 is provided in the vehicle compartment, the seat back 14 can be rotated, without the side seat backs 16 hitting such members, due to the side seat backs 16 being made to enter in the region of rotation of the seat back 14.

The side seat backs 16 can be made to enter into the region of rotation of the seat back 14 without removing the side seat backs 16 from the seat back 14. Thus, there is no need to provide a special, separate storage place for the removed side seat backs 16.

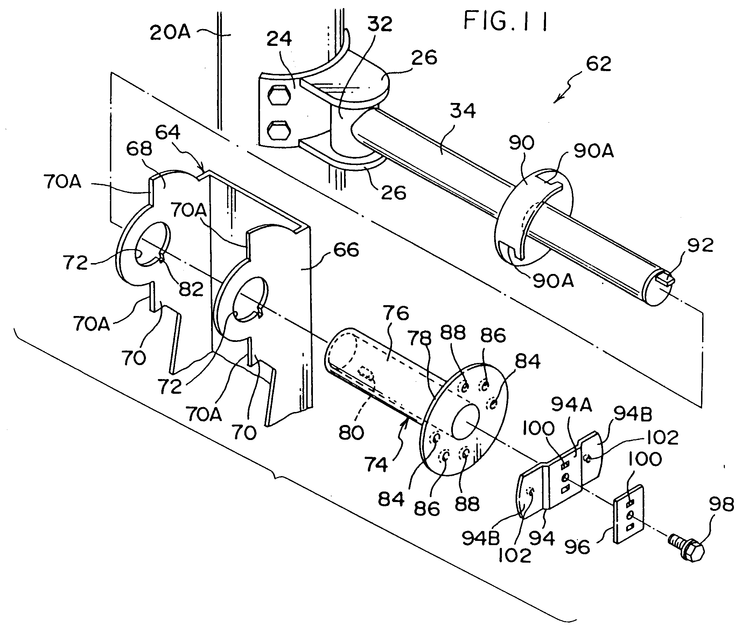

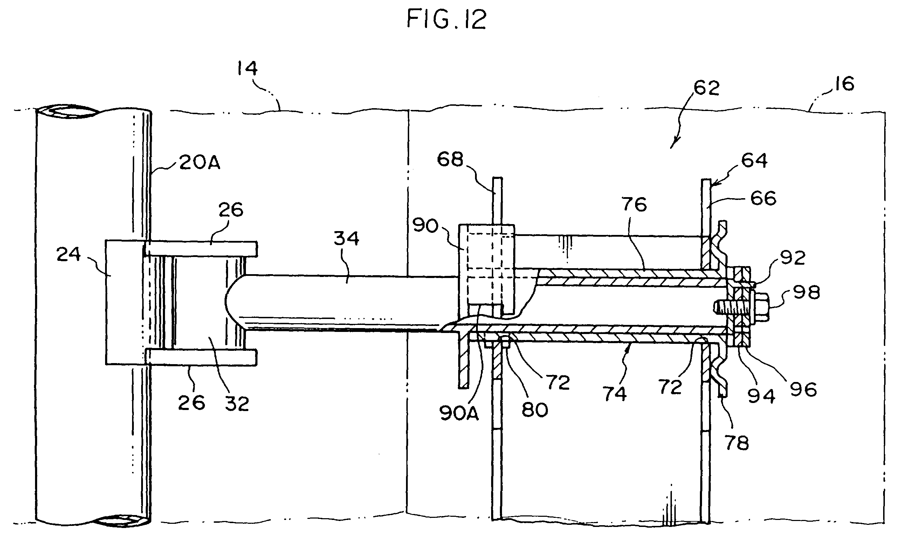

A hinge 62 of a seat (e.g., a rear seat of a vehicle) according to a second embodiment of the present invention is shown in Figs. 11 through 13. The seat according to the second embodiment has a similar structure to that of the rear seat 10 according to the first embodiment shown in Figs. 1 through 4 except for the structure of the hinge 62. Elements and members similar to those of the first embodiment are denoted by the same reference numerals, and description thereof is omitted.

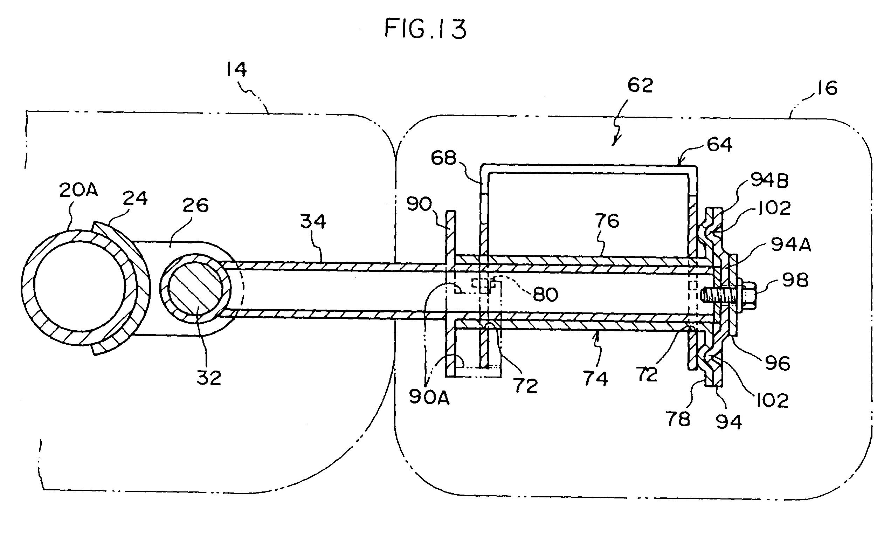

A side seat frame 64 of the seat according to the second embodiment is formed in a substantial U-shape in plan view as can be seen from Fig. 13. As shown in Fig.11, broad width portions 70 are formed at opposing walls 66, 68 of the side seat frame 64 which portions have broader width. Portions of broad width portions 70 swell in arc-shapes, and insertion holes 72 are formed thereat. The end surfaces of the broad width portion 70 above and below the insertion hole 72 are abutment portions 70A which are abutted by end portions 90A of a stopper 90 which will be described later.

A collar 74 is inserted in the insertion holes 72 such that the collar is hung between the opposing walls 66 and 68. The collar 74 comprises a cylindrical portion 76 and a disk-shaped portion 78 which projects outward in a circle from one end of the cylindrical portion 76.

A projection 80 is formed so as to project outwardly from the cylindrical portion 76 and fits into concave portions 82 formed at the insertion holes 72 so that the cylindrical portion 76 is inserted in the insertion holes 72. Therefore, the collar 74 and the side seat frame 64 are rotated integrally. In the state in which the collar 74 has been inserted in the side seat frame 64, the disk-shaped portion 78 hits the opposing wall 66 such that further insertion is prevented and the collar 74 is positioned in the axial direction.

A plurality of pairs of engagement concave portions 84, 86, 88 (in Fig. 11, six engagement concave portions, i.e., three pairs) are formed in predetermined positions of the disk-shaped portion 78. Engagement projections 102, which will be described later, can be engaged selectively with one pair of these engagement concave portions 84, 86, 88.

The rotating portion 34 of the arm 30 is inserted in the cylindrical portion 76. The stopper 90 is formed at a predetermined position of the rotating portion 34 and comprises a disk-shaped portion and an arc portion. The disk-shaped portion projects outwardly in the radial direction of the rotating portion 34, and the arc portion extends in the peripheral direction from a portion of the outer periphery of the disk-shaped portion. The stopper 90 contacts the opposing wall 68 so that the rotating portion 34 is positioned in the axial direction. In this state, the collar 74 and the side seat frame 64 are rotatable around the rotating portion 34. However, this rotation is limited to a given range by the abutment portion 70A hitting against the peripheral direction end portions 90A of the arc portion of the stopper 90.

A plate-shaped projection 92 projects in the axial direction from the distal end of the rotating portion 34. The projection 92 projects outwardly in the axial direction from the disk-shaped portion 78 when the rotating portion 34 is inserted to a predetermined position of the cylindrical portion 76 of the collar 74.

A spring member 94 and a plate 96 are fixed by a screw 98 to the distal end of the rotating portion 34 at a the position at the axial direction outer side of the disk-shaped portion 78 of the collar 74. The end surface of the spring member 94 is formed substantially in the shape of a hat, and a center portion 94A of the spring member 94 is positioned so as to project further outwardly in the axial direction than respective end portions 94B. The center portion 94A is pushed against the collar 74 by the screw 98 so that the center portion 94A works as a leaf spring and urges the end portions 94B toward the disk-shaped portion 78.

Housing holes 100 are formed in the center portion 94A and the plate 96, and the projection 92 of the rotating portion 34 is housed therein. Therefore, the rotating portion 34, the spring member 94 and the plate 96 are rotated integrally. Even if the collar 74 is rotated in the peripheral direction with respect to the rotating portion 34, the spring member 94 and the plate 96 are not rotated with respect to the rotating portion 34. Therefore, relative rotational difference arises between the collar 74 and the spring member 94.

The one or plural engagement projections 102 (two engagement projections in Fig. 11) are formed on the end portions 94B so as to project toward the disk-shaped portion 78 of the collar 74. When the collar 74 is st a predetermined angle with respect to the spring member 94, the engagement projections 102 are engaged with the engagement concave portions 84 of the disk-shaped portion 78 and stop rotation of the collar 74 (lock the collar 74).

As shown in Fig. 1, when the side seat back 16 of the seat, which has the hinge 62 structured in the above-described way, is substantially flush with the seat back 14, the engagement projections 102 of the spring member 94 are engaged with the engagement concave portions 84 among the plurality of engagement concave portions 84, 86 and 88. Therefore, the side seat back 16 is locked with respect to the seat back 14 and cannot be rotated inadvertently.

As shown in Fig. 2, when the lower end of the side seat back 16 is raised, the side seat frame 64 is rotated and the collar 74 is rotated with respect to the rotating portion 34 and the spring member 94 of the hinge 62. The engagement concave portions 84 separate from the engagement projections 102, and the disk-shaped portion 78 hits and slides on the distal ends of the engagement projections 102. Therefore, resistance of a degree suitable for rotating the side seat back 16 arises.

When the angle of rotation of the side seat back 16 reaches a predetermined angle, i.e., substantially 45°, the engagement projections 102 are engaged with the engagement concave portions 86, and the rotation of the side seat back 16is temporarily stopped. Here, the seat back 14 can be lowered and reclined.

When the side seat back 16 is rotated further, the collar 74 is rotated further with respect to the spring member 94, and the engagement concave portions 86 separate from the engagement projections 102. The disk-shaped portion 78 hits and slides on the distal ends of the engagement projections 102. Therefore, resistance of a degree suitable for rotating the side seat back 16 arises.

As shown in Fig. 2, when the side seat back 16 is raised substantially 90°upward from the position at the transverse direction end of the seat back 14 so that the side of the side seat back 16 which has the largest surface area is substantially parallel to the floor panel, the engagement projections 102 are engaged with the engagement concave portions 88, and the end portions of the stopper 90 abut the abutment portions 70A. Therefore, rotation of the side seat back 16 is limited, and the side seat back 16 is locked to the seat back 14.

Thereafter, in the same way as the rear seat 10 according to the first embodiment, the side seat back 16 is rotated around the shaft portion 32 inwardly in the vehicle transverse direction, and the side seat back 16 contacts the front surface 14A of the seat back 14 so as to be disposed on the front surface 14A of the seat back 14. The side seat back 16 is thereby made to enter into the region of rotation of the seat back 14. Therefore, the seat back 14 can be reclined and set in the full-flat state without the side seat back 16 hitting the wheel house 56.

Even when the side seat back 16 is not disposed on the front surface 14A of the seat back 14, i.e., even in the state in which the side seat back 16 is raised substantially 90°upward from the position at the transverse direction end of the seat back 14 so that the side of the side seat back 16 which has the largest surface area is substantially parallel to the floor panel or the state in which the lower end portion of the side seat back 16 is raised upward by some predetermined angle, the side seat back 16 does not abut against the vehicle body or the like (e.g., an interior part such as the wheel house or the deck trim) when the seat back 14 is rotated, and thus, the seat back 14 can be set in a full-flat state. Here, the side seat back 16 may be set substantially perpendicular to an unillustrated floor panel (a deck floor) of the vehicle body or at a predetermined angle with respect to the floor panel, such that the side seat back 16 does not get in The way of a vehicle occupant who is lying down on the seat back 14 set in the full- flat state.

The method for making the side seat back 16 enter into the region of rotation of the seat back 14 is not limited to the above-described methods. For example, when the side seat back 16 may be made to enter into the region of rotation of the seat back 14 merely by rotating the side seat back 16 around the shaft portion 32 without raising the lower end thereof upward. Further, the supporting means for supporting the side seat back 16 with respect to the seat back 14 is not limited to the hinge 22 and 62. Namely, it suffices for the side seat back 16 to be supported at the seat back 14 such that the side seat back 16 can enter into the region of rotation of the seat back 14, without the side seat back 16 being removed from the seat back 14.

The seat relating to the present invention is not limited to the above-described rear seat 10 of a vehicle, and may be a regular seat in which the seat back 14 is substantially broadened by the side seat backs 16. Namely, even in the case of a regular seat as well, reclining would be limited due to the side seat back 16 abutting another member if the seat back 14 was reclined with the side seat back 16 being fixed at a transverse direction end portion position of the seat back 14. However, by making the side seat back 16 enter into the region of rotation of the seat back 14, the side seat back 16 does not abut another member, and thus, the seat back 14 can be reclined without such limitations.

The seat according to the first aspect of the present invention comprises a seat cushion supporting weight of persons sitting thereon; a seat back rotatably mounted to said seat cushion; a side seat back provided at a transverse direction end portion of said seat back; and supporting means supporting said side seat back such that said side seat back is movable with respect to said seat back from a position at which said side seat back is disposed at the transverse direction end portion of said seat back to a position at which said side seat back has entered into a region of rotation of said seat back. Therefore, the seat back can be set in the full-flat state without the side seat back being removed from the seat back, and the structure of other members need not be changed.

In the seat according to the second aspect of the present invention, in the first aspect, said supporting means is a hinge rotating said side seat back from the position at which said side seat back is disposed at the transverse direction end portion of said seat back toward a surface of a seat cushion side of said seat back, so as to make said side seat back enter into the region of rotation of said seat back. Therefore, with a simple structure, the side seat back can be made to enter into the region of rotation of the seat back.

In the seat according to the third aspect of the present invention, in the second aspect, said hinge supports said side seat back in the vicinity of an upper end of said side seat back such that said side seat back is rotatable around an axis substantially parallel to an axis of rotation of said seat back. Therefore, the side seat back can easily be made to enter into the region of rotation of the seat back.

In the seat according to fourth aspect of the present invention, in the third aspects, said hinge has a lock mechanism locking said side seat back with respect to said seat back in a state in which said side seat back is rotated around said axis and a lower end side of said side seat back is raised. Therefore, the side seat back can easily be made to enter into the region of rotation of the seat back.

## Claims

1. A seat comprising:
a seat cushion supporting weight of persons sitting thereon;
a seat back rotatably mounted to said seat cushion;
a side seat back provided at a transverse direction end portion of said seat back; and
supporting means supporting said side seat back such that said side seat back is movable with respect to said seat back from a position at which said side seat back is disposed at the transverse direction end portion of said seat back to a position at which said side seat back has entered into a region of rotation of said seat back.

2. A seat according to claim 1, wherein said supporting means is a hinge rotating said side seat back from the position at which said side seat back is disposed at the transverse direction end portion of said seat back toward a surface of a seat cushion side of said seat back, so as to make said side seat back enter into the region of rotation of said seat back.

3. A seat according to claim 2, wherein said hinge supports said side seat back in the vicinity of an upper end of said side seat back such that said side seat back is rotatable around an axis substantially parallel to an axis of rotation of said seat back.

4. A seat according to claim 3, wherein said hinge has a lock mechanism locking said side seat back with respect to said seat back in a state in which said side seat back is rotated around said axis and a lower end side of said side seat back is raised.

5. A seat according to claim 4, wherein said lock mechanism locks said side seat back with respect to said seat back when said side seat back is substantially flush with said seat back.

6. A seat according to any of claims 4 to 5, wherein said lock mechanism has lock balls, helical compression springs and engagement concave portions.

7. A seat according to claim 6, wherein said side seat back is locked with respect to said seat back by said lock ball being engaged with said engagement concave portion due to urging force of said helical compression spring.

8. A seat according to any of claims 4 to 5, wherein said lock mechanism has engagement projections, a spring member and engagement concave portions.

9. A seat according to claim 8, wherein said side seat back is locked with respect to said seat back by said engagement projection being engaged with said engagement concave portion due to urging force of said spring member.
